# EUROPÄISCHE PATENTSCHRIFT

(11) **EP 0 559 951 B1**
(45) Veröffentlichungstag und Bekanntmachung des Hinweises auf die Patenterteilung: **17.04.1996**
(21) Anmeldenummer: 92112991.2
(22) Anmeldetag: 30.07.1992
(51) Int. Cl.: B26D 1/36, E04C 5/03

(54) **Verfahren und Schneidwerkzeug zum Herstellen von Stahlblechfasern**
Process and cutting tool for the production of fibres out of steel plates
Procédé et outil de coupe pour la réalisation de fibres à partir de tôles d'acier

(30) Priorität: 13.03.1992 DE 4208080
(43) Veröffentlichungstag der Anmeldung: 15.09.1993
(73) Patentinhaber: VULKAN-HAREX STAHLFASERTECHNIK GmbH & Co. KG, D-44653 Herne (DE)
(72) Erfinder: Borttscheller, Michael, Dipl.-Ing., W-4600 Dortmund 1 (DE); Hackforth, Bernd, W-4690 Herne 1 (DE)
(74) Vertreter: Finkener und Ernesti Patentanwälte

(56) Entgegenhaltungen:
- EP-A- 0 392 039
- BE-A- 869 225
- DE-A- 1 922 105
- DE-A- 2 307 245
- DE-U- 1 949 018
- FR-A- 2 031 892

## Beschreibung

Die Erfindung bezieht sich auf ein Verfahren zum Herstellen von Stahlblechfasern zum Beimischen in zement- oder kunstharzgebundenen Baustoffen gemäß dem Oberbegriff des Patentanspruchs 1. Weiter bezieht sich die Erfindung auf ein Schneidwerkzeug zur Anwendung in diesem Verfahren.

Bei der Herstellung von Stahlblechfasern dieser Art ist es bekannt, in einem ersten Arbeitsgang mit einem rotierenden Schneidwerkzeug gerade Stahlfasern am Stirnende dünngewalzter Bleche abzuschneiden und die so gewonnenen Fasern in einem zweiten Arbeitsgang durch Prägen oder dergleichen an ihren Enden zu verformen. Für eine solche Herstellung von Stahlblechfasern werden zumindest zwei unterschiedliche Bearbeitungseinrichtungen benötigt; außerdem ist die Herstellung zeitaufwendig und entsprechend teuer.

Die Erfindung will hier Abhilfe schaffen. Sie verfolgt das Ziel, das Herstellen von Stahlblechfasern zu verbessern, vor allem dahingehend, daß Stahlblechfasern in einer gewünschten Endgestalt in einem einzigen Arbeitsgang herstellbar sind. Weiter bezweckt die Erfindung die Schaffung eines geeigneten Schneidwerkzeuges für die Ausübung dieses Verfahrens.

Zur Lösung der gestellten Aufgabe schlägt die Erfindung ein Verfahren vor, bei dem Schneidmesser mit einer Schneidkantenkontur eingesetzt werden, die der gewünschten Endgestalt der Fasern, d. h. mit einem mittigen geraden Schaftteil und biegeverformten Endabschnitten, entspricht, so daß Stahlblechfasern in einem einzigen kombinierten Präge- und Schneidvorgang als Fertigprodukt erzeugbar sind. Dabei werden gemäß der Erfindung zwei zusammenwirkende Schneidmesser benutzt, von denen das eine Messer eine gerade Schneidkante aufweist und an dem anderen Messer die Präge- und Schneidkante einen in Schneidrichtung vorstehenden Mittenabschnitt und zurückspringende Endabschnitte aufweist.

Der Hauptvorteil der Erfindung besteht somit darin, daß anders als bisher Stahlblechfasern statt in zwei in einem einzigen Arbeitsgang hergestellt werden können.

Vorteilhafte Weiterbildungen des neuen Verfahrens sind in den Unteransprüchen 2 bis 4 beschrieben.

So kann ein aufeinanderfolgendes Abschneiden von Stahlblechfasern vorteilhafterweise unter Verwendung eines feststehenden Untermessers und eine Anzahl von gleichen Obermessern, die an einer rotierenden Walze mit Abstand in Umfangsrichtung hintereinander angeordnet sind, bewirkt werden.

Das Verfahren kann auch in der Weise durchgeführt werden, daß ein rotierendes Schneidwerkzeug mit wenigstens zwei oder mehr axial nebeneinanderliegenden Schneidmessern von einem einteiligen oder einem in Längsrichtung unterteilten Blechstreifen abgeschnitten werden.

Das Verfahren ist leicht dadurch beeinflußbar, daß Schnittgeschwindigkeit und/oder Schnittbreite des Schneidwerkzeugs in geeigneter Weise variiert werden.

Ein Schneidwerk zur Durchführung des Verfahrens mit wenigstens einem beweglichen Obermesser und einem unbeweglichen Untermesser ist erfindungsgemäß so ausgebildet, daß die Präge- und Schneidkante des Obermessers eine der gewünschten Endgestalt der Stahlblechfasern angepaßten Kontur aufweist, dergestalt, daß das eine Messer eine gerade Schneidkante aufweist und an dem anderen Messer die Präge- und Schneidkante einen in Schneidrichtung vorstehenden Mittenabschnitt und zurückspringende Endabschnitte aufweist.

Bei der üblichen Endgestalt solcher Stahlblechfasern besteht die Profilierung aus einem in Schneidrichtung vorstehenden, zur Oberfläche des Stahlblechbandes parallelen Mittenabschnitt und an beiden Seiten aus zurückspringenden Endabschnitten in einer Wellen oder flachen S-Form, wobei die Prägebreite der gewünschten Breite der Stahlblechfasern entspricht.

Eine andere vorteilhafte Weiterbildung des Schneidwerkzeugs besteht darin, daß die Prägeoberfläche des Obermessers gegenüber der Oberfläche des Stahlblechbandes derart geneigt ausgebildet ist, daß im Augenblick des Auftreffens ein nach außen offener Schnittwinkel α von bis zu 15° vorhanden ist.

Um ein Abschneiden der Stahlblechfasern nach Art eines Scherenschnitts zu erreichen ist es vorteilhaft, am Ober- oder Untermesser die Schnittkante gegenüber der Drehachse des Schneidkopfes abzuwinkeln, und zwar mit einem Verdrehungswinkel β bis zu ca. 30°.

Durch diese Ausgestaltung beginnt das Abschneiden einer Stahlblechfaser jeweils an einer Längsseite des Stahlblechbandes und schreitet von hier bis zur entgegengesetzten Längsseite bis zum vollständigen Abtrennen der Stahlblechfaser fort. Dabei entstehen zugleich Stahlblechfasern mit einer gewissen Verdrillung in der Längsachse, die den zusätzlichen Vorteil eines erhöhten Ausziehwiderstandes im eingebetteten Zustand mit sich bringt.

Bei Verwendung eines rotierenden Schneidwerkzeugs können nach einer anderen vorteilhaften Weiterbildung an einer Walze axial nebeneinander einzelne Gruppen von Obermessern scheibenartig mit jeweils gleichem Teilungsabstand in Umfangsrichtung angeordnet werden und es können weiterhin die jeweils benachbarten Gruppen in Umfangsrichtung um eine Bogenlänge y gegeneinander versetzt angeordnet werden.

Bei entsprechender Auswahl der Bogenläge y und der Untermesseranordnung können aus einem einteiligen Stahlblechband Stahlblechfasern mit gewünschter Länge abgeschitten werden. Es kann also auf eine Längsspaltung entsprechend der Länge der Stahlblechfasern verzichtet werden. Das Durchtrennen des Stahlblechbandes in Längsrichtung erfolgt vielmehr jeweils mit der Stirnkante des Obermessers, welches dem jeweils benachbarten Obermesser um die Bogenlänge y voreilt.

Ausführungsbeispiele der Erfindung sind in der Zeichnung schematisch dargestellt und werden nachfolgend näher erläutert. Es zeigt:
- Fig. 1: eine Seitenansicht eines rotierenden Schneidkopfes gemäß der Erfindung mit einer Anzahl von Obermessern,
- Fig. 2: als Ausschnitt eine perspektivische Darstellung eines einzigen Obermessers in einem größeren Maßstab,
- Fig. 3: als Ausschnitt eine Seitenansicht mit der abgewinkelten Anordnung eines Obermessers,
- Fig. 4: eine Ansicht auf die Stirnseite eines Obermessers,
- Fig. 5: eine Abwicklung eines rotierenden Schneidkopfes mit scheibenweise axial nebeneinanderliegenden Gruppen von Obermessern und
- Fig. 6: eine um die Längsachse verdrehte fertige Stahlblechfaser, bei der an den Enden zwei unterschiedliche Verformungsmöglichkeiten dargestellt sind.

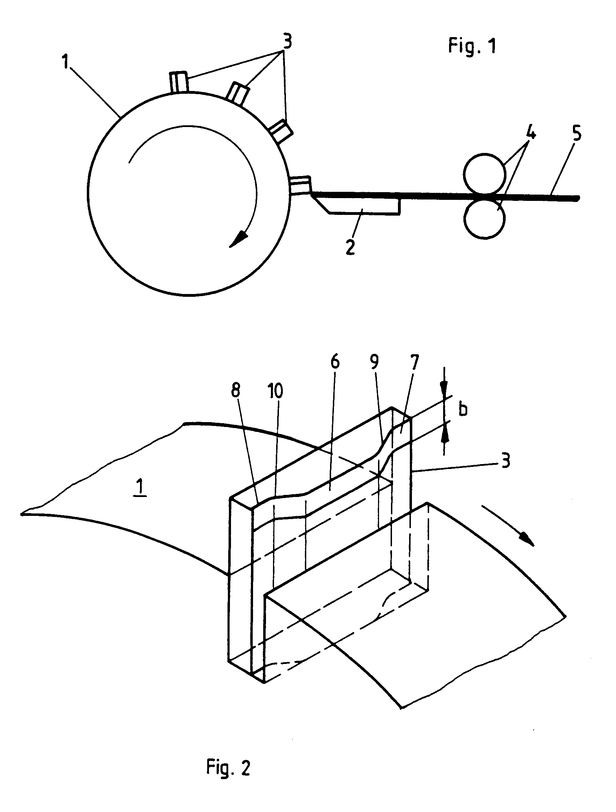

Fig. 1 zeigt in Seitenansicht das Herstellen von Stahlblechfasern mit einer rotierenden Schneidwalze (1) in Verbindung mit einem feststehenden Untermesser (2). An der Schneidwalze (1) sind an ihrem Umfang mit gleichem Abstand voneinander eine Vielzahl von Obermessern (3) in geeigneter Weise befestigt. Mit Hilfe einer geeigneten Zufuhreinrichtung, von der zwei gegenläufig rotierende Zufuhrwalzen (4) dargestellt sind, wird ein Stahlblechband (5) in gewünschter Stärke und Breite kontinuierlich zugeführt. Die gewünschte Breite der fertigen Stahlblechfasern wird über die Geschwindigkeit der Zufuhrwalzen (4) - Drehzahl - eingestellt. Das feststehende Untermesser (2) ist an der Seite der Schittkante nach hinten abgeschrägt ausgebildet, wie es in Fig. 1 dargestellt ist.

Jedes einzelne Obermesser (3) ist im wesentlichen als rechteckige Platte ausgebildet, bei der die in bezug auf die Drehrichtung vorn liegende Plattenoberfläche in geeigneter Weise profiliert ist. Bei dem Ausführungsbeispiel weist die Oberfläche einen geraden, zur Drehachse parallelen Mittenabschnitt (6) und je einen parallelen, kürzeren Endabschnitt (7, 8) auf. Mittenabschitt (6) und Endabschnitte (7, 8) sind durch je einen Zwischenabschnitt (9, 10) in einer flachen S-Form verbunden. Die so gewählte Oberflächenkontur bestimmt die Gestalt der fertigen Stahlblechfaser.

Vor Beginn jedes Schneidvorgangs wird das Stahlblechband (5) entsprechend der gewünschten Breite der Stahlblechfasern vorgeschoben, so daß das Schneidmesser (3) auf einer Breite b zur Einwirkung kommt. Das Abtrennen einer einzelnen Stahlblechfaser erfolgt dabei in einem kombinierten Präge- und Schneidvorgang.

Zur Vermeidung von Quetschungen während des Abtrennens werden die einzelnen Schneidmesser (3) nicht radial, sondern mit einer leichten Neigung zur Radialebene an der Schneidwalze (1) angeordnet. Somit verläuft die Oberfläche des Schneidmesser (3) im Augenblick des Auftreffens auf das Stahlblechband (5) unter einem Neigungswinkel α, der beispielsweise bis zu 5° betragen kann. Gleichzeitig entsteht durch die Schrägstellung an der Stirnseite des Schneidmessers (3) ein gleichgroßer Brustwinkel γ.

Der Schneidvorgang und ebenso die Gestaltung der Stahlblechfasern können weiter dadurch beeinflußt werden, daß das Schneidmesser (3) gegenüber der Drehachse (11) der Schneidwalze (1) nicht parallel, sondern mit einer Neigung angeordnet wird. Der sich dabei ergebende Verdrehungswinkel β kann bis zu 30° betragen. Anstelle der Obermesser (3) kann auch das Untermesser (2) mit einer entsprechenden Neigung gegenüber der Drehachse (11) eingesetzt werden.

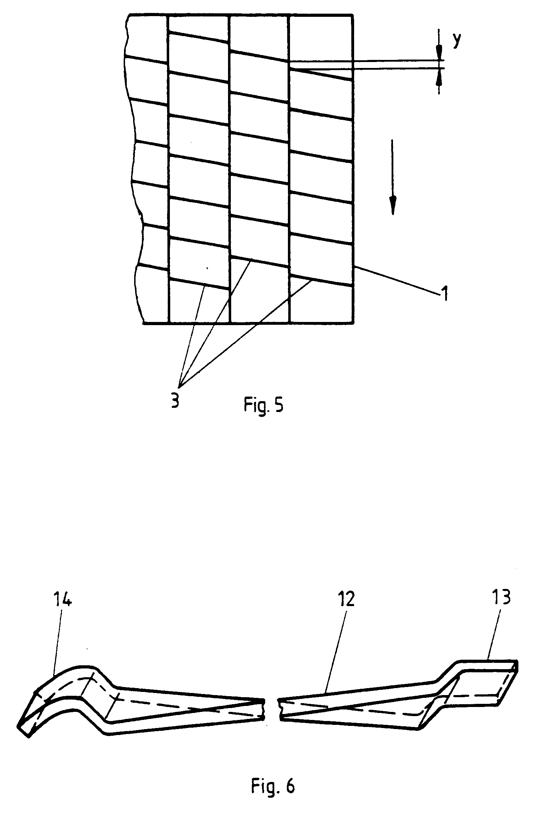

Die Leistung einer rotierenden Schneidwalze kann beträchtlich erhöht werden, wenn an der Oberfläche der Schneidwalze in axialer Richtung zwei oder mehr Gruppen von Schneidmessern (3) unmittelbar nebeneinander angeordnet werden, wie es in Fig. 5 schematisch dargestellt ist.

Die Schneidmesser (3) in benachbarten Gruppen sind in Umfangsrichtung versetzt zueinander angeordnet. Diese gegenseitige Verschiebung wird so gewählt, daß zwischen der "ablaufenden" Kante der Schneidmesser (3) einer vorhergehenden Gruppe und der Anfangskante eines Schneidmessers (3) der benachbarten Gruppe ein Abstand y eingehalten wird. Dieser Abstand kann je nach der Größe der Schneidwalze und den zu erzeugenden Stahlblechfasern einige mm betragen.

Diese Maßnahme in Verbindung mit der Anordnung des (oder der) Untermessers bietet die Möglichkeit, nebeneinanderliegende Stahlblechfasern aus einem einteiligen Stahlblechband (5) abzuschneiden, ohne dies vorher in Längsrichtung entsprechend der Anzahl der herzustellenden Stahlblechfasern aufteilen zu müssen. Durch die versetzte Anordnung der einzelnen Schneidmesser (3) mit einem bestimmten Abstand y ist sichergestellt, daß jeweils am Ende eines Schneidvorganges quer zur Vorschubrichtung auch an der Stirnkante zwischen der gerade erzeugten Stahlblechfaser und der in Querrichtung nächst folgenden eine Abtrennung parallel zur Vorschubrichtung erfolgt.

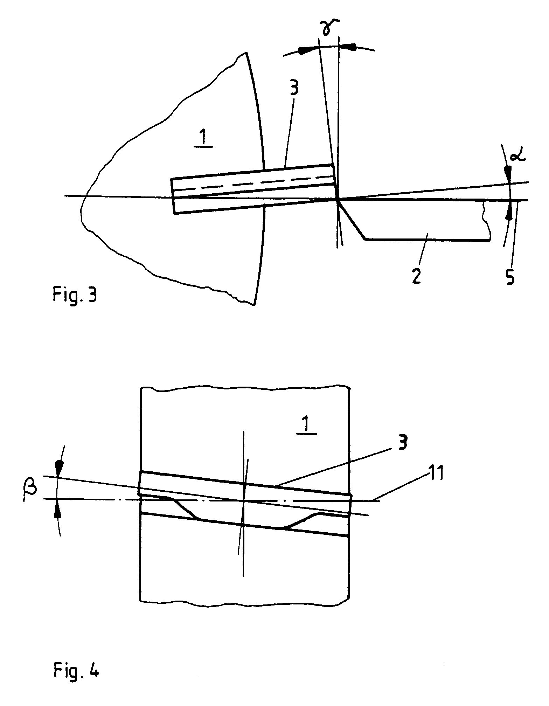

Fig. 6 zeigt ein Beispiel einer fertigen Stahlblechfaser, die im geraden Schaftteil (12) um ihre Längsachse verdrillt ist. Dabei ist in der rechten Hälfte der verformte Endabschitt (13) geradlinig ausgebildet entsprechend der Kontur des Schneidmessers gemäß Fig. 3. Der linke Endabschnitt (14) ist dagegen in sich gekrümmt, so daß insgesamt eine flache S-Form entsteht. Die Radien der Übergänge können je nach der Blechstärke 0,5 bis 3,0 mm betragen. Der Faserquerschnitt ist bei dem dargestellten Ausführungsbeispiel rechteckig. Die Länge einer solchen Stahlblechfaser kann bis zu 50 mm oder mehr betragen.

## Patentansprüche

1. Verfahren zum Herstellen von Stahlblechfasern zum Beimischen in zement- oder kunstharzgebundenen Baustoffen, bei dem aus einem sich bewegenden Stahlblechband (5) durch aufeinanderfolgendes Abschneiden mit einem Schneidwerkzeug quer zur Bewegungsrichtung des Bandes (5) untereinander gleiche Fasern mit im wesentlichen rechteckigem Querschnitt erzeugt werden, dadurch gekennzeichnet, daß Schneidmesser (2, 3) mit einer Schneidkantenkontur gewählt werden, die der gewünschten Endgestalt der Fasern, d. h. mit einem mittigen Schaftteil und biegeverformten Endabschnitten in gleichbleibender Faserbreite, entspricht, dergestalt, daß das eine Messer (2) eine gerade Schneidkante aufweist und an dem anderen Messer (3) die Präge- und Schneidkante einen in Schneidrichtung vorstehenden Mittenabschnitt (6) und zurückspringende Endabschnitte (7, 8) aufweist und daß die Fasern in einem einzigen kombinierten Präge- und Schneidvorgang als Fertigprodukt erzeugt werden.

2. Verfahren nach Anspruch 1, dadurch gekennzeichnet, daß das aufeinanderfolgende Abschneiden der Fasern unter Verwendung eines feststehenden Untermessers (2) und einer Anzahl von gleichen Obermessern (3), die an einer rotierenden Walze (1) in Umfangrichtung hintereinander befestigt sind, bewirkt wird.

3. Verfahren nach Anspruch 1 oder 2, dadurch gekennzeichnet, daß die Fasern mit Hilfe eines Schneidwerkzeuges mit wenigstens zwei in derselben Ebene axial nebeneinanderliegenden Schneidmessern (3) von einem einteiligen oder einem in Längsrichtung unterteilten Blechstreifen (5) abgeschnitten werden.

4. Verfahren nach einem der Ansprüche 1 bis 3, dadurch gekennzeichnet, daß die Schnittgeschwindigkeit des Schneidwerkzeugs veränderbar ist.

5. Schneidwerkzeug zur Durchführung des Verfahrens nach einem der Ansprüche 1 bis 4, mit wenigstens einem beweglichen Obermesser (3) und einem unbeweglichen Untermesser (2), dadurch gekennzeichnet, daß die Präge- und Schneidkante des Ober- oder Untermessers (3, 2) eine der gewünschten Endgestalt der Fasern angepaßte Kontor aufweist, dergestalt, daß das eine Messer (2) eine gerade Schneidkante aufweist und an dem anderen Messer (3) die Präge- und Schneidkante einen in Schneidrichtung vorstehenden Mittenabschnitt (6) und zurückspringende Endabschnitte (7, 8) aufweist.

6. Schneidwerkzeug nach Anspruch 5, dadurch gekennzeichnet, daß das Untermesser (2) eine gerade Schneidkante aufweist und daß am Obermesser (3) die Präge- und Schneidkante einen in Schneidrichtung vorstehenden, zur Oberfläche des Stahlblechbandes (5) parallelen Mittenabschnitt (6) und zurückspringende Endabschnitte (7, 8) in einer Wellen- oder flachen S-Form aufweist und eine wenigstens der Breite einer fertigen Faser entsprechende Prägebreite b hat.

7. Schneidwerkzeug nach einem der Ansprüche 5 bis 6 mit einem Schneidkopf in Form einer rotierenden Walze (1) und einer Anzahl von an der Walze befestigten gleichen Obermessern (3), dadurch gekennzeichnet, daß am Ober- oder Untermesser (2, 3) die Schnittkante gegenüber der Drehachse des Schneidkopfes abgewinkelt ausgebildet ist, und zwar mit einem Verdrehungswinkel β bis zu ca. 30°.

8. Schneidwerkzeug nach Anspruch 5 oder 7, dadurch gekennzeichnet, daß die Prägeoberfläche des Obermessers (3) gegenüber der Oberfläche des Stahlblechbandes (5) derart geneigt ausgebildet ist, daß im Augenblick des Auftreffens ein nach außen offener Schnittwinkel α von bis zu ca. 15° vorhanden ist.

9. Schneidwerkzeug nach Anspruch 8, dadurch gekennzeichnet, daß an der Walze (1) axial nebeneinander zwei oder mehr Gruppen von Obermessern (3) mit jeweils gleichem Teilungsabstand in Umfangsrichtung angeordnet sind und daß die Obermesser in benachbarten Gruppen in Umfangsrichtung um eine Bogenlänge y gegeneinander versetzt sind.

10. Schneidwerkzeug nach Anspruch 9, dadurch gekennzeichnet, daß Untermesser (2) in verschiedenen Schnittebenen angeordnet sind.

## Claims

1. Process for manufacturing sheet steel fibres for admixing into cement or resin-bonded building materials, in which process identical fibres with an essentially rectangular cross-section are produced from a moving sheet steel strip (5) by successive cropping with a cutting tool at right-angles to the direction of motion of the strip (5), **characterised in that** cutters (2, 3) are selected, which have a cutting edge contour which corresponds to the desired final shape of the fibres, i.e. with a central shank and bent end sections of uniform fibre width, in such a way that one of the cutters (2) has a straight cutting edge and at the other cutter (3) the die stamping edge and the cutting edge has a central section (6) projecting in the direction of cut, and recessed end sections (7, 8), and that the fibres are produced as a finished product in a single, combined die stamping and cutting operation.

2. Process according to Claim 1, characterised in that the successive cropping of the fibres is effected by employing a fixed bottom cutter (2) and a number of identical top cutters (3), which are attached to a rotating roll (1), one behind the other in the circumferential direction.

3. Process according to Claim 1 or 2, characterised in that the fibres are cropped from a one-piece sheet strip (5) or from a sheet strip (5) divided in the longitudinal direction, with the aid of a cutting tool having at least two cutters (3) arranged axially alongside each other in the same plane.

4. Process according to one of Claims 1 to 3, characterised in that the cutting speed of the cutting tool is variable.

5. Cutting tool for carrying out the process according to one of Claims 1 to 4, with at least one moving top cutter (3) and a stationary bottom cutter (2), characterised in that the die stamping and cutting edge of the top or bottom cutter (3, 2) has a contour matched to the desired final shape of the fibres, in such a way that one of the cutters (2) has a straight cutting edge and at the other cutter (3) the die stamping edge and the cutting edge has a central section (6) projecting in the direction of cut, and recessed end sections (7, 8).

6. Cutting tool according to Claim 5, characterised in that the bottom cutter (2) has a straight cutting edge and that at the top cutter (3) the die stamping and cutting edge has a central section (6) projecting in the direction of cut parallel to the surface of the sheet steel strip (5), and recessed end sections (7, 8) of an undulating or flat S-shape, and has a die width *b* corresponding to at least the width of a finished fibre.

7. Cutting tool according to one of Claims 5 to 6, having a cutter head in the form of a rotating roll (1) and a number of identical top cutters (3) attached to the roll, characterised in that at the top or bottom cutter (2, 3) the cutting edge is formed at an angle to the axis of rotation of the cutter head, that is to say an angle of twist β of up to approximately 30°.

8. Cutting tool according to Claim 5 or 7, characterised in that the die face of the top cutter (3) is formed at an angle to the surface of the sheet steel strip (5), so that at the moment of impact there is an outwardly open cutting angle α of up to approximately 15°.

9. Cutting tool according to Claim 8, characterised in that two or more groups of top cutters (3) are arranged with identical spacing in the circumferential direction on the roll (1), and that the top cutters are displaced from each other in adjacent groups in the circumferential direction by an arc length γ.

10. Cutting tool according to Claim 9, characterised in that the bottom cutters (2) are arranged in different cutting planes.

## Revendications

1. Procédé de fabrication de fibres en tôle d'acier à ajouter à des matériaux de construction liés au ciment ou à la résine synthétique, au cours duquel des fibres, qui ont une section transversale sensiblement rectangulaire et qui sont identiques les unes aux autres, sont obtenues dans une bande en tôle d'acier (5) en mouvement par découpes successives avec un outil de coupe transversalement au sens du mouvement de la bande (5), caractérisé en ce que les lames de coupe (2, 3) sont choisies avec un contour d'arête qui correspond à la forme souhaitée pour l'extrémité des fibres, c'est-à-dire avec une partie centrale en forme de tige et des sections terminales déformées par flexion pour une largeur uniforme des fibres, de façon que l'une des lames (2) présente une arête de coupe droite et que sur l'autre lame (3) l'arête d'estampage et de coupe présente un segment central (6) en saillie dans le sens de coupe et deux segments d'extrémité (7, 8) en retrait, et en ce que les fibres sont produites sous forme de produit fini au cours d'un unique processus combiné d'estampage et de coupe.

2. Procédé selon la revendication 1, caractérisé en ce que les coupes successives des fibres sont réalisées en mettant en oeuvre une lame inférieure (2) fixe et une multiplicité de lames supérieures (3) identiques qui sont fixées les unes derrière les autres périphériquement sur un cylindre (1) rotatif.

3. Procédé selon la revendication 1 ou 2, caractérisé en ce que les fibres sont coupées à l'aide d'un outil de coupe comprenant au moins deux lames (3), disposées axialement côte à côte dans le même plan, dans une bande métallique (5) d'une seule pièce ou subdivisée dans le sens longitudinal.

4. Procédé selon l'une quelconque des revendications 1 à 3, caractérisé en ce que la vitesse de coupe de l'outil de coupe est modifiable.

5. Outil de coupe selon l'une quelconque des revendications 1 à 4 comprenant au moins une lame supérieure (3) mobile et une lame inférieure (2) fixe, caractérisé en ce que l'arête d'estampage et de coupe de la lame supérieure ou inférieure (3, 2) présente un contour adapté à la forme terminale souhaitée des fibres de façon que l'une des lames (2) présente une arête de coupe droite et que sur l'autre lame (3) l'arête d'estampage et de coupe présente un segment central (6) en saillie dans le sens de coupe et deux segments d'extrémité (7, 8) en retrait.

6. Outil de coupe selon la revendication 5, caractérisé en ce que la lame inférieure (2) présente une arête de coupe droite et en ce que sur la lame supérieure (3) l'arête d'estampage et de coupe présente un segment central (6) en saillie dans le sens de coupe et parallèle à la surface de la bande en tôle d'acier (5) et deux segments d'extrémité (7, 8) en retrait en forme d'onde ou de S plat, et possède une largeur d'estampage b correspondant au moins à la largeur d'une fibre finie.

7. Outil de coupe selon l'une quelconque des revendications 5 à 6 comprenant une tête de coupe en forme de cylindre rotatif (1) et une multiplicité de lames supérieures (3) identiques fixées sur le cylindre, caractérisé en ce que sur les lames supérieure et inférieure (2, 3) les arêtes de coupe sont inclinées par rapport à l'axe de rotation de la tête de coupe, avec un angle d'inclination β pouvant atteindre 30° environ.

8. Outil de coupe selon la revendication 5 ou 7, caractérisé en ce que la surface d'estampage de la lame supérieure (3) est inclinée par rapport à la surface de la bande en tôle d'acier (5) de telle sorte qu'au moment de mise en contact soit formé un angle de coupe α ouvert vers l'extérieur pouvant atteindre 15° environ.

9. Outil de coupe selon la revendication 8, caractérisé en ce que deux ou plusieurs groupes de lames supérieures (3) sont disposés sur le cylindre (1) côte à côte dans le sens axial et à intervalles égaux les unes des autres dans le sens périphérique, et en ce que les lames supérieures appartenant à des groupes voisins sont décalées les unes par rapport aux autres dans le sens périphérique d'une longueur d'arc y.

10. Outil de coupe selon la revendication 9, caractérisé en ce que des lames inférieures (2) sont disposées dans différents plans de coupe.
